# EUROPÄISCHE PATENTSCHRIFT

(11) **EP 4 469 822 B1**
(45) Veröffentlichungstag und Bekanntmachung des Hinweises auf die Patenterteilung: **31.12.2025**
(21) Anmeldenummer: 23701299.2
(22) Anmeldetag: 18.01.2023
(51) Int. Cl.: G01S 13/89, G01S 13/04, G01S 7/41, G01S 13/931, B60N 2/02, B60N 2/26, B60N 2/00

(54) **VERFAHREN ZUM BETRIEB EINES RADARSENSORSYSTEMS ZUR INNENRAUMÜBERWACHUNG EINES KRAFTFAHRZEUGS**
METHOD FOR OPERATING A RADAR SENSOR SYSTEM FOR MONITORING THE PASSENGER COMPARTMENT OF A MOTOR VEHICLE
PROCÉDÉ DE FONCTIONNEMENT D'UN SYSTÈME DE CAPTEUR RADAR POUR LA SURVEILLANCE DE L'HABITACLE D'UN VÉHICULE AUTOMOBILE

(30) Priorität: 25.01.2022 DE 102022101719
(43) Veröffentlichungstag der Anmeldung: 04.12.2024
(73) Patentinhaber: Brose Fahrzeugteile SE & Co. Kommanditgesellschaft, Coburg, 96450 Coburg (DE)
(72) Erfinder: WALTER, Jakob Markus, 96047 Bamberg (DE)
(74) Vertreter: Gottschald Patentanwälte Partnerschaft mbB
(86) Internationale Anmeldenummer: PCT/EP2023/051049
(87) Internationale Veröffentlichungsnummer: WO 2023/143973

(56) Entgegenhaltungen:
- WO-A1-2021/220190
- WO-A1-2021/234836
- JP-A- 2018 202 921
- US-A- 5 943 295
- CHEN YIXUAN ET AL: "In-cabin Monitoring Based on Millimeter Wave FMCW radar", 2021 13TH INTERNATIONAL SYMPOSIUM ON ANTENNAS, PROPAGATION AND EM THEORY (ISAPE), IEEE, vol. Volume1, 1 December 2021 (2021-12-01), pages 1 - 3, XP034114454, DOI: 10.1109/ISAPE54070.2021.9753085

## Beschreibung

Die vorliegende Erfindung betrifft ein Verfahren zum Betrieb eines Radarsensorsystems zur Innenraumüberwachung eines Kraftfahrzeugs gemäß dem Oberbegriff von Anspruch 1.

Anwendung finden die in Rede stehenden Radarsensorsysteme in der Sensorik von Kraftfahrzeugen. Neben der Verwendung von Radarsensorsystemen zur Überwachung des Fahrzeugaußenbereichs, beispielsweise für Fahrerassistenzsysteme, ist es bekannt, Radarsensorsysteme für die Überwachung des Innenraums von Kraftfahrzeugen einzusetzen. Mit solchen Radarsensorsystemen wird insbesondere eine Personeninformation für Sitze im Innenraum bereitgestellt. Die Personeninformation kann beispielsweise angeben, ob der jeweilige Sitz belegt oder frei ist, oder auch Hinweise enthalten, ob ein Rückhaltesystem wie ein Sicherheitsgurt von einem Insassen angelegt ist.

Zudem besteht eine besonders sicherheitsrelevante Verwendung eines Radarsensorsystems zur Erkennung eines unbeaufsichtigt im Kraftfahrzeug zurückgelassenen Kindes. Hierzu wird beispielsweise mittels der Radarsensoren eine biometrische Personeninformation, beispielsweise hinsichtlich der Körpergröße der Person, der Atemfrequenz der Person oder dergleichen ermittelt.

Die JP 2018-202921 A betrifft ein Sicherheitssystem zur Erkennung von Insassen eines Kraftfahrzeugs. Die WO 2021/220190 A1 betrifft ein Überwachungssystem für den Innenraum eines Kraftfahrzeugs mit einer zentral angeordneten Radareinheit. Der Artikel "In-cabin Monitoring Based on Millimeter Wave FMCW radar" von Chen et al. (DOI: 10.1109/ISAPE54070.2021.9753085) beschäftigt sich mit einer experimentellen Studie zu einem Radarsystem zum Erfassen von Zielen im Innenraum eines Kraftfahrzeugs. Die US 5,943,295 A betrifft ein Verfahren zur Lokalisierung eines Insassen mittels Ultraschallsensorik. Die WO 2021/234836 A1 betrifft Radarsensoren für Kraftfahrzeuge, wobei die Erfassung eines Insassen auf den Rücksitzen unter Berücksichtigung der Sitzposition des Insassen auf den Vordersitzen beschrieben ist.

Die Sitze im Innenraum eines Kraftfahrzeugs sind in der Regel verstellbar ausgestaltet. Es ist dabei eine Herausforderung, die Personeninformation auch unter verschiedenen Konfigurationen der Sitze und somit bei unterschiedlichen Positionen und Körperhaltungen der Insassen zuverlässig vorzunehmen.

Der Erfindung liegt das Problem zugrunde, das gattungsgemäße Verfahren derart auszugestalten und weiterzubilden, dass hinsichtlich der genannten Herausforderung eine weitere Optimierung erreicht wird.

Das obige Problem wird durch die Merkmale des kennzeichnenden Teils von Anspruch 1 gelöst.

Wesentlich ist die grundsätzliche Überlegung, dass Sitze auch derart verstellbar sein können, dass eine auf dem Sitz befindliche Person in einem Erfassungsbereich eines Radarsensors nur teilweise erfasst wird. Hierbei kann es zu einer fehlerhaften Klassifikation der Radarziele kommen, da beispielsweise die Größe und Körperhaltung der Person aufgrund der nur teilweisen Erfassung falsch eingeschätzt werden.

Im Einzelnen wird vorgeschlagen, dass eine gemeinsame Zuordnung von Personen-Radarzielen aus verschiedenen, zueinander benachbarten Erfassungsbereichen zu einer Person vorgenommen wird.

Besonders bevorzugte Ausgestaltungen sind Gegenstand der Unteransprüche.

Im Folgenden wird die Erfindung anhand einer lediglich Ausführungsbeispiele darstellenden Zeichnung näher erläutert. In der Zeichnung zeigt
- Fig. 1: a) ein Kraftfahrzeug mit einem Radarsensorsystem zur Durchführung des vorschlagsgemäßen Verfahrens,
b) eine schematische Seitenansicht des Innenraums und
- Fig. 2: eine beispielhafte Zuordnung von Radarzielen zu einer Person und zu mehreren Personen.

Das in den Figuren dargestellte und insoweit bevorzugte Ausführungsbeispiel betrifft ein Verfahren zum Betrieb eines Radarsensorsystems 1 zur Innenraumüberwachung eines Kraftfahrzeugs 2, wobei das Radarsensorsystem 1 mehrere Radarsensoren 3, 3' aufweist, mittels welcher in jeweiligen Erfassungsbereichen 4, 4' des Innenraums 5 Personen-Radarziele 6, 6' identifiziert werden, und wobei basierend auf den Personen-Radarzielen 6, 6' für im Innenraum 5 angeordnete Sitze 7, 7' jeweilige Personeninformationen erzeugt werden.

Bei dem Innenraum 5 handelt es sich um einen Bereich des von der Außenkontur des Kraftfahrzeugs 2 aufgespannten Raums, welcher hier zumindest einen Teil des Fahrgastraums enthält. Der mittels des Radarsensorsystems 1 erfasste Innenraum 5 weist hier mehrere Sitze 7, 7' auf.

Die Radarsensoren 3, 3' des Radarsensorsystems 1 weisen jeweils mindestens eine Antennenanordnung und eine Steuereinheit auf, welche hier nicht im Einzelnen dargestellt sind. Die Antennenanordnung weist bevorzugt ein oder mehrere Antennen auf, welche insbesondere als Antennenarray in einer vorgegebenen Winkelstellung und Position zueinander angeordnet sind. Mittels der Steuereinheit wird die Antennenanordnung zum Senden von Radarwellen und zum Empfangen der im Innenraum 5 des Kraftfahrzeugs 2 reflektierten und/oder gestreuten Radarwellen betrieben.

Die Steuereinheiten realisieren hier einen kontinuierlichen, insbesondere frequenzmodulierten, Betrieb des jeweiligen Radarsensors 3, 3', etwa als FMCW-Radarsensor. Die Radarsensoren 3, 3' sind beispielsweise zum Betrieb mit Radarstrahlung im Frequenzband um 24 GHz, 60 GHz bis 65 GHz und/oder 77 GHz eingerichtet. In einer weiteren Ausgestaltung wird ein gepulster Betrieb der Radarsensoren 3, 3' vorgenommen, etwa als UWB-Radarsensor im Frequenzbereich 6,5 bis 10 GHz.

Unter dem Erfassungsbereich 4, 4' wird der Abschnitt des Innenraums 5 verstanden, welcher durch den jeweiligen Radarsensor 3, 3' überwacht und für welchen eine Auswertung der auf Grundlage der gesendeten und empfangenen Radarwellen ermittelten Radarsignale vorgenommen wird.

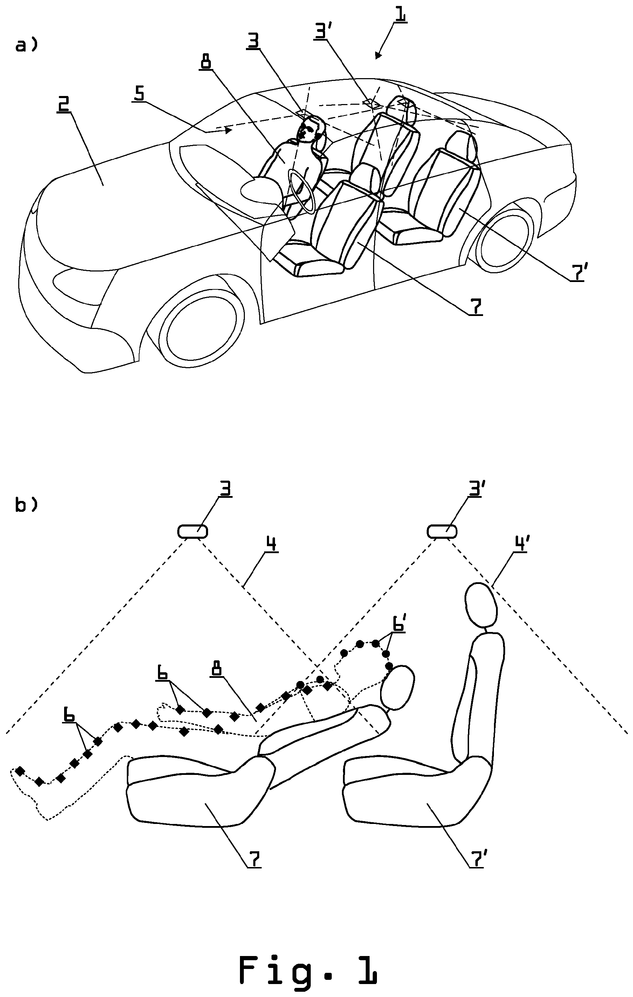

Die Erfassungsbereiche 4, 4' der Radarsensoren 3, 3' sind, wie in Fig. 1 gezeigt, hier nicht identisch. Beispielsweise grenzen die Erfassungsbereiche 4, 4' aneinander an und überlappen insbesondere, was beispielhaft in Fig. 1b) gezeigt ist. Denkbar ist allerdings auch, dass die Erfassungsbereiche 4, 4' zueinander beabstandet sind.

Die Steuereinheiten können mit der Antennenanordnung gemeinsam in den Radarsensoren 3, 3' integriert oder auch zumindest teilweise in einer zentralen Steuereinheit, beispielsweise der zentralen Kraftfahrzeugsteuerung, vorgesehen sein. Mindestens eine der Steuereinheiten kann zudem einer Auswertung der Radarsignale dienen und weist hierfür vorzugsweise einen Prozessor und einen elektronischen Speicher auf, in welchem Befehle zur Umsetzung des Verfahrens hinterlegt sind. Ebenfalls können die Steuereinheiten mit einer Auswerteeinheit kommunizieren, welche die Auswertung der Radarsignale übernimmt.

Mit der Auswertung werden Personen-Radarziele 6, 6' in den Radarsignalen identifiziert. Die Identifikation wird beispielsweise anhand von mittels den Radarsensoren 3, 3' ermittelten Intensitätswerten, vorzugsweise einer Mindestintensität der reflektierten Radarwellen, und/oder Geschwindigkeitswerten, vorzugsweise einer Mindest- und/oder Höchstgeschwindigkeit, von Objekten im Erfassungsbereich 4, 4' vorgenommen. Insbesondere anhand von Geschwindigkeitswerten, welche beispielsweise als Doppler-Information in den Radarsignalen enthalten sind, lassen sich Lebewesen zuzuordnende Radarziele mit hoher Sicherheit von Radarzielen von leblosen Objekten im Innenraum 5 unterscheiden.

Ein Beispiel für jeweilige Personeninformation eines Sitzes 7, 7' ist eine Information über eine Sitzbelegung oder den Zustand eines Rückhaltesystems, wobei ergänzend auf die einleitenden Ausführungen verwiesen wird. Im Vordergrund für das vorliegende Ausführungsbeispiel steht die Unterscheidung der Sitzbelegung durch einen Erwachsenen von der Sitzbelegung durch ein Kind, womit das Radarsensorsystem 1 insbesondere zur Erkennung eines im Kraftfahrzeug 2 zurückgelassenen Kindes verwendet werden kann, sowie die Erkennung der Körperhaltung der Person 8.

Die Sitze 7, 7' im Innenraum 5 sind manuell und/oder motorisch verstellbar ausgestaltet. Die Erfindung geht davon aus, dass mindestens einer der Sitze 7, 7' derart verstellbar ist, dass eine auf dem Sitz 7, 7' befindliche Person 8 in mehreren Erfassungsbereichen 4, 4' Radarziele erzeugen kann.

Eine solche beispielhafte Anordnung ist in Fig. 1 gezeigt. Hier sind für die Überwachung der vorderen und hinteren Sitzreihe jeweilige Radarsensoren 3, 3' vorgesehen. Wird der Fahrer- oder Beifahrersitz 7 aus der vorderen Sitzreihe jedoch in eine weiter in Richtung der hinteren Sitzreihe weisende Konfiguration, hier eine Liegekonfiguration, verstellt, so kann eine nur teilweise Erfassung der auf dem Sitz 7, 7' befindlichen Person 8 im Erfassungsbereich 4 des vorderen Radarsensors 3 auftreten oder Körperteile der Person 8, die sich beispielsweise in Randbereichen des Erfassungsbereichs 4 befinden, nicht zuverlässig klassifiziert werden.

Wesentlich ist nun, dass eine gemeinsame Zuordnung von Personen-Radarzielen 6, 6' aus verschiedenen, zueinander benachbarten Erfassungsbereichen 4, 4' zu einer Person 8 vorgenommen wird.

Unter "zueinander benachbarten" Erfassungsbereichen 4, 4' sind, wie bereits angesprochen, nicht zwingend aneinander angrenzende oder überlappende Erfassungsbereiche 4, 4' zu verstehen.

Durch die gemeinsame Zuordnung von Personen-Radarzielen 6, 6' zu einer (einzigen) Person 8 werden folglich die durch verschiedene Radarsensoren 3, 3' erfassten Radarziele ergänzend herangezogen. Insbesondere kann hiermit eine Unterscheidung vorgenommen werden, ob in den einzelnen Erfassungsbereichen 4, 4' identifizierte Personen-Radarziele 6, 6' einer einzigen Person 8 zuzuordnen sind (etwa einem Erwachsenen in einer Liegeposition) oder mehreren Personen 8, 8' (etwa zwei hintereinander oder nebeneinander sitzenden Kindern).

Weiter ist hier und vorzugsweise vorgesehen, dass Radarziele in den verschiedenen, zueinander benachbarten Erfassungsbereichen 4, 4' zusammengeführt werden und dass die gemeinsame Zuordnung zur Person 8, 8' anhand der zusammengeführten Radarziele vorgenommen wird, vorzugsweise, dass die Radarziele in den mehreren Erfassungsbereichen 4, 4' in einem gemeinsamen Referenzsystem zusammengeführt werden und die Radarziele basierend auf der jeweiligen Lage, insbesondere dem Abstand der Radarziele und/oder der durch die Radarziele aufgespannten Form, im gemeinsamen Referenzsystem der Person 8 zugeordnet werden.

Unter einem "Zusammenführen" der Personen-Radarziele 6, 6' ist zu verstehen, dass ein jeweiliger Satz von Personen-Radarzielen 6, 6' insbesondere geometrisch miteinander in Zusammenhang gebracht wird. Vorzugsweise wird ein gemeinsames Referenzsystem verwendet, und hierin die jeweiligen Personen-Radarziele 6, 6', deren Position relativ zu dem jeweiligen Radarsensor 3, 3' ermittelbar ist, bei bekannter Anordnung der Radarsensoren 3, 3', abgebildet.

Denkbar ist auch, dass bereits die Radarsignale der Radarsensoren 3, 3' zusammengeführt werden und dass die Identifikation der Personen-Radarziele 6, 6' an den zusammengeführten Radarsignalen vorgenommen wird.

Mit der Berücksichtigung des Abstands und/oder der Form der Radarziele kann insbesondere zwischen einer einzigen Person 8 oder mehreren Personen 8, 8' unterschieden werden.

In einer weiteren bevorzugten Ausgestaltung ist vorgesehen, dass eine jeweilige Vorklassifikation der Radarziele in den jeweiligen Erfassungsbereichen 4, 4' vorgenommen wird, und dass die Zuordnung zur Person 8 anhand der Vorklassifikation vorgenommen wird, vorzugsweise, dass in der Vorklassifikation Radarziele als Körperteile einer Person 8 in den verschiedenen Erfassungsbereichen 4, 4' klassifiziert werden, weiter vorzugsweise, dass anhand der als Körperteile klassifizierten Radarziele aus verschiedenen Erfassungsbereichen 4, 4' die Zuordnung zur Person 8 vorgenommen wird.

Eine Vorklassifikation kann insbesondere anhand von Intensitätswerten, Geschwindigkeitswerten, dem Abstand der Radarziele und/oder der durch die Radarziele aufgespannten Form vorgenommen werden. Über die Vorklassifikation kann insbesondere beurteilt werden, ob eine Person 8 nur teilweise in dem betreffenden Erfassungsbereich 4, 4' detektiert wird.

Die Zuordnung zu einer Person 8 anhand der Vorklassifikation kann basierend auf einer Zuordnungsvorschrift vorgenommen werden. Beispielsweise wird bei einem Erkennen von jeweiligen Körperteilen in benachbarten Erfassungsbereichen 4, 4' davon ausgegangen, dass die Körperteile derselben Person 8 zuzuordnen sind. Die Vorklassifikation kann auch weitergehend dahin erfolgen, welcher Körperteil erfasst ist. Beispielsweise wird bei Erkennen eines Oberkörpers in einem Erfassungsbereich 4, 4' und bei Erkennen eines Unterkörpers in einem benachbarten Erfassungsbereich 4, 4' eine Zuordnung zu derselben Person 8 getroffen.

Hierbei kann auch die Ausrichtung und/oder Position der Körperteile berücksichtigt werden. Beispielsweise ist nur bei einem am Rand des Erfassungsbereichs 4, 4' befindlichen Körperteil davon auszugehen, dass dieser Körperteil gemeinsam mit weiteren Personen-Radarzielen 6, 6' derselben Person 8 zuzuordnen ist.

Weiter ist hier und vorzugsweise vorgesehen, dass Radarziele aus den verschiedenen, zueinander benachbarten Erfassungsbereichen 4, 4' abhängig von einem Vergleich von Geschwindigkeitswerten der Radarziele und/oder abhängig von einer, vorzugsweise sensorisch erfassten, Stellungsinformation des verstellbaren Sitzes 7, 7' gemeinsam einer Person 8 zugeordnet werden.

Hierbei kann insbesondere eine Plausibilisierung der Zuordnung vorgenommen werden. Hierbei kann angenommen werden, dass lediglich Personen-Radarzielen 6, 6' mit ähnlichen Geschwindigkeitswerten derselben Person 8 zuzuordnen sind. Die Geschwindigkeitswerte können beispielsweise auf Vorliegen einer für die Atembewegung und/oder den Puls repräsentative Periodizität geprüft werden.

Ebenfalls kann bei einer Erkennung einer liegenden Person 8 auf einem Sitz 7, 7' geprüft werden, ob die Stellungsinformation dieses Sitzes 7, 7' repräsentativ für eine Liegekonfiguration ist. Die Stellungsinformation kann über entsprechende Sensoren an den Sitzen 7, 7', beispielsweise Stellungssensoren bei motorisch verstellbaren Sitzen 7, 7' oder Positionsschaltern bei manuell verstellbaren Sitzen 7, 7' abgefragt werden. Zudem ist denkbar, dass das Radarsensorsystem 1 zur Bestimmung der Stellungsinformation verwendet wird.

Weiter ist hier und vorzugsweise vorgesehen, dass für die gemeinsame Zuordnung der Personen-Radarziele 6, 6' zu einer Person 8, 8' eine Erkennungswahrscheinlichkeit ermittelt wird, vorzugsweise, dass die Personen-Radarziele 6, 6' anhand der Erkennungswahrscheinlichkeit gemeinsam einer Person 8 zugeordnet oder mehreren Personen 8, 8' zugeordnet werden.

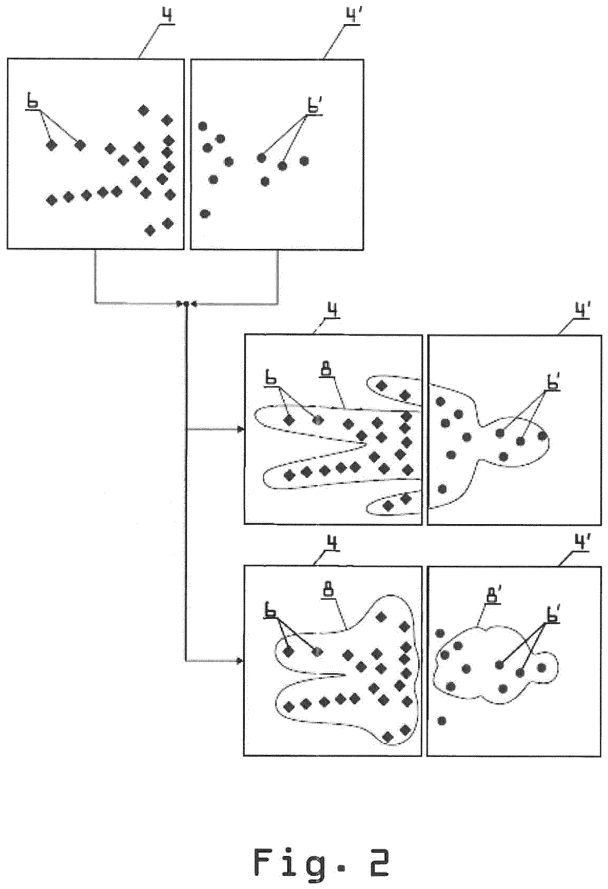

Die Erkennungswahrscheinlichkeit kann im Rahmen einer Klassifikation der Personen-Radarziele 6, 6' ermittelt werden. Fig. 2 zeigt beispielhaft die möglichen Zuordnungen der Personen-Radarziele 6, 6' aus benachbarten Erfassungsbereichen 4, 4' zu einer Person 8 oder mehreren Personen 8, 8'. Für beide Szenarien kann eine Erkennungswahrscheinlichkeit ermittelt werden, welche als Kriterium zur Unterscheidung der Fälle dient.

Weiter offenbart wird ein Radarsensorsystem 1 zur Durchführung des vorschlagsgemäßen Verfahrens.

## Patentansprüche

1. Verfahren zum Betrieb eines Radarsensorsystems (1) zur Innenraumüberwachung eines Kraftfahrzeugs (2), wobei das Radarsensorsystem (1) mehrere Radarsensoren (3, 3') aufweist, mittels welcher in jeweiligen Erfassungsbereichen (4, 4') des Innenraums (5) Personen-Radarziele (6, 6') identifiziert werden, und wobei basierend auf den Personen-Radarzielen (6, 6') für im Innenraum (5) angeordnete Sitze (7, 7') jeweilige Personeninformationen erzeugt werden,
**dadurch gekennzeichnet,**
**dass** eine gemeinsame Zuordnung von Personen-Radarzielen (6, 6') aus verschiedenen, zueinander benachbarten Erfassungsbereichen (4, 4') zu einer Person (8) vorgenommen wird.

2. Verfahren nach Anspruch 1, **dadurch gekennzeichnet, dass** Radarziele in den verschiedenen, zueinander benachbarten Erfassungsbereichen (4, 4') zusammengeführt werden und dass die gemeinsame Zuordnung zur Person (8) anhand der zusammengeführten Radarziele vorgenommen wird, vorzugsweise, dass die Radarziele in den mehreren Erfassungsbereichen (4, 4') in einem gemeinsamen Referenzsystem zusammengeführt werden und die Radarziele basierend auf der jeweiligen Lage, insbesondere dem Abstand der Radarziele und/oder der durch die Radarziele aufgespannten Form, im gemeinsamen Referenzsystem der Person (8) zugeordnet werden.

3. Verfahren nach Anspruch 1 oder 2, **dadurch gekennzeichnet, dass** eine jeweilige Vorklassifikation der Personen-Radarziele (6, 6') in den jeweiligen Erfassungsbereichen (4, 4') vorgenommen wird, und dass die gemeinsame Zuordnung zur Person (8) anhand der Vorklassifikation vorgenommen wird, vorzugsweise, dass in der Vorklassifikation Radarziele als Körperteile einer Person (8) in den verschiedenen, zueinander benachbarten Erfassungsbereichen (4, 4') klassifiziert werden.

4. Verfahren nach einem der vorhergehenden Ansprüche, **dadurch gekennzeichnet, dass** Radarziele aus den verschiedenen, zueinander benachbarten Erfassungsbereichen (4, 4') abhängig von einem Vergleich von Geschwindigkeitswerten der Radarziele und/oder abhängig von einer, vorzugsweise sensorisch erfassten, Stellungsinformation des verstellbaren Sitzes (7, 7') gemeinsam einer Person (8) zugeordnet werden.

5. Verfahren nach einem der vorhergehenden Ansprüche, **dadurch gekennzeichnet, dass** für die gemeinsame Zuordnung der Personen-Radarziele (6, 6') zu einer Person (8) eine Erkennungswahrscheinlichkeit ermittelt wird, vorzugsweise, dass die Personen-Radarziele (6, 6') anhand der Erkennungswahrscheinlichkeit gemeinsam einer Person (8) zugeordnet oder mehreren Personen (8, 8') zugeordnet werden.

## Claims

1. A method for operating a radar sensor system (1) for monitoring the interior of a motor vehicle (2), wherein the radar sensor system (1) comprises multiple radar sensors (3, 3'), by means of which person radar targets (6, 6') in the respective detection areas (4, 4') of the interior (5) are identified, and wherein respective person information is generated based on the person radar targets (6, 6') for seats (7, 7') arranged in the interior (5),
**characterized in that**
a joint assignment of person radar targets (6, 6') from various detection areas (4, 4') adjacent to one another to one person (8) is performed.

2. The method as claimed in claim 1, **characterized in that** radar targets in the various detection areas (4, 4') adjacent to one another are merged, and that the joint assignment of the person (8) is performed on the basis of the merged radar targets, preferably that the radar targets in the multiple detection areas (4, 4') are merged in a common reference system and the radar targets are assigned to the person (8) based on the respective location, in particular the distance between the radar targets and/or the shape spanned by the radar targets, in the common reference system.

3. The method as claimed in claim 1 or 2, **characterized in that** a respective pre-classification of the person radar targets (6, 6') in the respective detection areas (4, 4') is performed, and that the joint assignment to the person (8) is performed on the basis of the pre-classification, preferably that in the pre-classification radar targets are classified as body parts of a person (8) in the various detection areas (4, 4') adjacent to one another.

4. The method as claimed in any one of the preceding claims, **characterized in that** radar targets from the various detection areas (4, 4') adjacent to one another are jointly assigned to one person (8) depending on a comparison of speed values of the radar targets and/or depending on setting information, which is preferably sensorially detected, of the adjustable seat (7, 7').

5. The method as claimed in any one of the preceding claims, **characterized in that** a recognition probability is determined for the joint assignment of the person radar targets (6, 6') to one person (8), preferably that the person radar targets (6, 6') are jointly assigned to one person (8) or are assigned to multiple persons (8, 8') on the basis of the recognition probability.

## Revendications

1. Procédé de fonctionnement d'un système (1) de capteurs radar destiné à surveiller l'habitacle d'un véhicule automobile (2), le système (1) de capteurs radar comprenant plusieurs capteurs radar (3, 3') permettant d'identifier des cibles radar (6, 6') de personnes dans des zones de détection (4, 4') respectives de l'habitacle (5), et dans lequel, sur la base des cibles radar (6, 6') de personnes, des informations respectives relatives aux personnes sont générées pour des sièges (7, 7') agencés dans l'habitacle (5),
**caractérisé**
**en ce qu'**une attribution conjointe de cibles radar (6, 6') de personnes, provenant de différentes zones de détection (4, 4') adjacentes les unes aux autres, à une personne (8), est effectuée.

2. Procédé selon la revendication 1, **caractérisé en ce que** des cibles radar dans les différentes zones de détection (4, 4') adjacentes les unes aux autres sont regroupées et **en ce que** l'attribution conjointe à la personne (8) est effectuée au moyen des cibles radar regroupées, les cibles radar dans les différentes zones de détection (4, 4') étant de préférence regroupées dans un système de référence commun, et les cibles radar étant attribuées à la personne (8) dans le système de référence commun en fonction de la position respective, en particulier de la distance entre les cibles radar et/ou de la forme formée par les cibles radar.

3. Procédé selon la revendication 1 ou la revendication 2, **caractérisé en ce qu'**une pré-classification respective des cibles radar (6, 6') de personnes est effectuée dans les zones de détection respectives (4, 4') et **en ce que** l'attribution conjointe à la personne (8) est effectuée sur la base de la pré-classification, de préférence **en ce que**, lors de la pré-classification, des cibles radar sont classées en tant que parties du corps d'une personne (8) dans les différentes zones de détection (4, 4') adjacentes les unes aux autres.

4. Procédé selon l'une des revendications précédentes, **caractérisé en ce que** des cibles radar provenant des différentes zones de détection (4, 4') adjacentes les unes des autres sont attribuées conjointement à une personne (8) en fonction d'une comparaison de valeurs de vitesse des cibles radar et/ou en fonction d'une information de position du siège réglable (7, 7'), de préférence détectée par capteur.

5. Procédé selon l'une des revendications précédentes, **caractérisé en ce qu'**une probabilité de reconnaissance est déterminée pour l'attribution conjointe des cibles radar (6, 6') de personnes à une personne (8), de préférence **en ce que** les cibles radar (6, 6') de personnes sont attribuées conjointement à une personne (8) ou à plusieurs personnes (8, 8') sur la base de la probabilité de reconnaissance.
